# FASCICULE DE BREVET EUROPEEN

(11) **EP 0 235 037 B1**
(45) Date de publication et mention de la délivrance du brevet: **15.05.1996**
(21) Numéro de dépôt: 87400378.3
(22) Date de dépôt: 20.02.1987
(51) Int. Cl.: A21B 3/13

(54) **Matérial polyvalent et membrane ou forme pour supporter des produits de panification ou analogues au cours du processus de fermentation et de cuisson de la pâte**
Mehrzweckvorrichtung mit Membrane oder Former zur Unterstützung von Brotprodukten oder dergleichen während des Gärens und Backens des Teiges
Polyvalent matter and membrane or form for supporting bread products or the like during the proving and cooking of the dough

(30) Priorité: 21.02.1986 FR 8602471
(43) Date de publication de la demande: 02.09.1987
(73) Titulaire: ETS GUY DEMARLE, F-80580 Pont Remy (FR)
(72) Inventeur: Badinier,Raymond, F-91170 Viry Chatillon (FR); Prevost, Didier, F-80100 Abbeville (FR); Prouvost,Gonzague, F-59700 Marcq en Baroeul (FR); Stubbe,Albert, F-59200 Tourcoing (FR)
(74) Mandataire: Gorree, Jean-Michel

(56) Documents cités:
- EP-A- 0 045 945
- FR-A- 2 097 608
- FR-A- 2 446 070
- FR-A- 2 480 081
- GB-A- 2 154 860
- US-A- 2 640 445
- US-A- 4 009 859

## Description

La présente invention concerne des perfectionnements apportés au matériel utilisé au cours de l'élaboration des produits de panification ou analogues, pour supporter les pâtons durant les étapes de fermentation et de cuisson de la pâte et plus précisément l'invention concerne une membrane ou forme selon le préambule de la revention 1 permettant de supporter les pâtons au cours de ces étapes, ainsi qu'un matériel polyvalent permettant la mise en oeuvre d'une telle membrane.

L'élaboration traditionnelle du pain ou de produits de panification analogues comporte deux étapes essentielles : la fermentation et la cuisson, ce qui suppose a priori des manipulations et des stockages intermediaires. Dans les méthodes les plus anciennes, les pâtons façonnés sont d'abord déposés pour la fermentation sur des toiles de lin que l'on appelle "couches". Ils sont ensuite repris un à un manuellement pour être placés directement sur la sole du four, soit à la pelle, soit par tapis enfourneur.

Ces manutentions sont délicates, et nécessitent une main d'oeuvre qualifiée car les pâtes à pain crues sont collantes, molles et plastiques.

L'apparition de supports recevant les pâtons pendant la fermentation et la cuisson, ainsi que la réalisation, grâce à ces supports, de fours ventilés ont apporté une sensible amélioration à ces méthodes.

L'un des principaux avantages par rapport aux méthodes classiques est de supprimer les manipulations.

Les pâtons sont placés juste après leur façonnage dans des supports alvéolés métalliques (filets en inox tressé ou plaques aluminium) ou souples (filets textiles) fixés sur un cadre métallique rigide ; les alvéoles correspondent à la forme des pains que l'on désire fabriquer. Les pâtons restent dans ces supports pendant la fermentation et la cuisson.

Quant au four ventilé, la chaleur nécessaire à la cuisson n'est plus apportée par une sole et une voûte, mais par un courant d'air chaud. Des chariots à étages reçoivent les supports métalliques ou souples définis ci-dessus et rentrent successivement dans les armoires de fermentation, puis dans le four ventilé. Assez souvent, le chariot est entraîné en rotation autour d'un axe vertical afin que la chaleur soit bien répartie (four rotatif). Pour les produits de petites dimensions, notamment en pâtisserie, les chariots sont remplacés par des glissières latérales fixées aux parois du four ventilé.

Les supports doivent permettre une bonne cuisson dans ce courant d'air chaud. C'est pourquoi ils sont fabriqués à partir de matériaux aérés tels que grillages métalliques à fines mailles, minces tôles métalliques perforées ou encore tissu de verre aéré comprenant un vide d'au moins 50 %, et fixés à un cadre métallique rigide.

De plus, ils sont traités spécialement pour être anti-adhérents, généralement en étant munis d'un revêtement à base d'élastomères de silicone, ou résines de silicone, ou polytétrafluoréthylène (Téflon).

Il est important de noter que ces supports sont flexibles, et, pour être manipulables, ils sont toujours fixés sur un cadre rigide composé d'un châssis métallique et parfois d'entretoises supportant chaque alvéole.

Le châssis correspond aux dimensions des chariots ; les entretoises sont adaptées à chaque type de filet, selon le nombre, la disposition et la forme des alvéoles.

Ce qui est décrit ci-dessus est par exemple illustré par les demandes de brevet FR. 2 097 608 et 2 559 030, dans lesquelles on trouve l'exemple de l'association d'un filet souple textile, constitué d'un tissu de verre enduit de silicone, avec à un cadre métallique rigide, auquel il est fixé, et dont la forme les destine à un usage unique.

Cette conception, pour autant avantageuse qu'elle soit, nécessite pour le boulanger un matériel nombreux et spécialisé, conçu pour chaque type de produit qu'il veut faire ; ceci nécessite un parc important et encombrant qui n'est pas utilisé en permanence, et dont on ne peut pas faire l'économie. D'autre part, le revêtement anti-adhérent de ces supports doit être refait périodiquement, ou certains matériaux doivent être changés, ce qui exige le retraitement ou la reprise complète de l'ensemble dans des usines spécialisées.

Par ailleurs, des essais ont été faits, visant à utiliser ces matériels dans des fours classiques à sole fixe. Mais la cuisson n'est pas satisfaisante sur les supports métalliques (cuisson hétérogène avec zones de brûlage = "ferrage" du pain). Elle est possible avec le support souple, mais dans ce cas, il doit être pratiquement mis en contact avec la sole du four, et l'on constate une usure rapide, due notamment à des phénomènes d'abrasion lors des manutentions.

Enfin, on notera, en outre, que les solutions de l'art antérieur ci-dessus exposées sont essentiellement valables pour les différentes formes de pains allongés à croûte, tels la baguette. Les techniques de supports souples du type filets suspendus, comme celles décrites dans la demande de brevet FR. 2 559 030, ne permettent en aucun cas la cuisson de formes rondes, carrées, ovales, etc. Ces formes de pâtes rondes, carrées, ovales, etc. doivent actuellement être cuites sur des plaques métalliques, embouties ou non, qui peuvent être soit graissées, soit recouvertes d'un revêtement anti-adhérent.

L'objet de l'invention est de proposer une nouvelle membrane et un nouveau matériel qui, par leur conception, permettent de remédier aux inconvénients ci-dessus exposés des membranes et matériels déjà connus et qui s'adaptent à moindres frais et facilement à tous les produits de panification ou analogues devant être cuits au four.

A ces fins, un premier aspect de l'invention porte sur une membrane ou forme antiadhérente destinée à supporter des produits de panification ou analogues au cours du processus de fermentation et de cuisson de la pâte, cette membrane étant constituée en au moins un élastomère de silicone ou une résine de silicone associé à une trame de renfort, membrane qui est caractérisée en ce que :
- elle est autoportante ;
- elle possède une configuration générale et des dimensions prédéterminées de manière telle qu'elle puisse reposer de façon amovible et interchangeable sur un plateau de support unique ; et
- elle est préformée pour présenter une multiplicité d'empreintes en creux indépendantes dudit support et ayant toutes formes souhaitables en correspondance avec les formes individuelles de panification ou analogue devant être soumises au processus de fermentation et de cuisson.

Une telle membrane ou forme peut être soit aérée, soit non aérée ; en outre, elle peut comporter une trame tissée, tricotée ou non tissée constituée de fils de verre et/ou de fibres de carbone et/ou de fils en céramique imprégnés et/ou enduits avec au moins un élastomère ou une résine de silicone.

Dans un premier mode de réalisation d'une telle membrane, l'anti-adhérence est obtenue par une imprègnation et/ou une enduction des brins par un ou plusieurs élastomères ou résines silicone, et son préformage est obtenu par moulage et raidissement par vulcanisation des élastomères ou par cuisson des résines de silicone, avec de préférence création de zones plus épaisses de silicone, pour assurer le raidissement et/ou la protection des zones fragiles.

Dans un autre mode de réalisation d'une telle membrane, l'anti-adhérence est obtenue par une imprégnation et/ou une enduction des brins par un ou plusieurs élastomères ou résines silicone, son préformage est obtenu par emboutissage et elle est raidie une fois emboutie, par vulcanisation des élastomères ou par cuisson des résines, avec de préférence création de zones plus épaisses de silicone, pour assurer le raidissement et/ou la protection des zones fragiles. Dans ce cas, il est souhaitable que l'emboutissage soit effectué de manière que tous les fils possèdent la même longueur en compensant les empreintes en creux par des bosses disposées dans les zones centrales sises entre les creux, les rangées latérales extérieures des bosses pouvant être inversées vers le bas.

Il est ainsi facile de donner à la membrane toute configuration appropriée au type de produit de panification ou analogue qu'elle doit supporter.

En particulier, dans le cas d'une membrane obtenue par moulage comme susmentionné, ladite membrane peut posséder un profil ondulé en forme de cuvettes quasi semi-cylindriques plus ou moins larges avec un fond plus ou moins aplati, ces cuvettes étant éventuellement séparées par des intervalles matérialisés par une surface plane sise au sommet des cuvettes assurant une meilleure circulation de la chaleur ; ou bien elle peut être moulée pour obtenir une succession de travées rectangulaires ou carrées à fond plat, séparées par un pli en forme de V inversé, destinées à recevoir des pièces de viennoiserie telles que des croissants, ou toutes autres pièces devant être jointives par un ou plusieurs points de leurs périmètres.

En particulier également, dans le cas d'une membrane obtenue par emboutissage comme susmentionné, ladite membrane peut être emboutie de façon à créer longitudinalement et transversalement des suites d'empreintes en creux, de forme rectangulaire ou carrée avec une dépouille permettant la sortie des pièces cuites et une séparation par d'étroits couloirs, de façon à recevoir toutes pièces à section rectangulaire ou carrée, telle que les pains chocolat, les tranches aux amandes ; ou bien elle peut être emboutie de façon à créer des berceaux ovales de forme oblongue avec une dépouille permettant de sortir les pièces, ces berceaux se succédant de façon adjacente par le grand côté, pouvant recevoir des pièces en forme de navette telle que les petits pains au lait, les croissants beurre ; ou bien encore elle peut être emboutie de façon à créer des lignes successives d'assiettes rondes et creuses, à fond plat, de diamètre, de profondeur et de dépouille variables, selon la nature des pièces à cuire, telle que petits pains ronds, pains pour hamburgers, buns, muffins, pains aux raisins ; ou bien enfin elle peut être emboutie de façon à créer une succession de demi-cylindres en creux, d'épaisseur et longueur variées permettant de recevoir des pièces telles que pains à hot dog, ficelles fantaisie.

Un second aspect de l'invention porte sur un nouveau matériel polyvalent pour supporter des produits de panification ou analogue au cours du processus de fermentation et de cuisson de la pâte. Etant agencé conformément à l'invention, ce matériel se caractérise en ce qu'il comporte :
- un plateau à bords latéraux et
- au moins une membrane ou forme anti-adhérente constituée comme indiqué plus haut.

Ce nouveau matériel polyvalent permet de pallier les inconvénients des méthodes actuelles :
- suppression des manipulations intermédiaires, dans le cas du four à sole fixe ou du four tunnel,
- utilisation pour tous les types de produits élaborés par le boulanger-pâtissier avec le minimum d'encombrement et d'immobilisation (pain, baguette, croissants, pains au chocolat, buns, petits pains au lait, hot dogs,...),
- utilisation aussi bien en four à sole fixe qu'en four ventilé, ou même dans les fours tunnels des boulangeries industrielles,
- suppression du retraitement des supports existants par simple remplacement de la membrane non fixée.

Un plateau destiné à entrer dans la constitution du matériel précité possède la forme d'un bac rectangulaire ou carré, à fond plat, de préférence ajouré, les bords, également de préférence ajourés, servant à caler la forme ou membrane préformée ; de préférence, dans un tel plateau la configuration de ses rebords latéraux autorise l'empilage ou emboîtage des plateaux ; avantageusement, ce plateau est réalisé en métal, de préférence en acier inoxydable ou en aluminium, ou bien, selon une autre possibilité, il est réalisé en un matériau non diélectrique pouvant être utilisé dans un four à micro-ondes ; une fixation démontable et amovible peut être aménagée sur les membranes ou forme de façon à éviter leur déplacement inopiné lors du démoulage automatique des pains par succion, balayage ou peignage.

L'invention va maintenant être décrite de façon détaillée avec référence aux dessins annexés, sur lesquels :
- la figure 1 est une vue d'ensemble en perspective, du matériel agencé conformément à l'invention ; et
- les figures 2 à 14 sont des vues à des échelles différentes, montrant divers composants ou parties de composants du matériel de la figure 1.

Dans le nouveau matériel polyvalent conforme à l'invention, un plateau rigide 1 se substitue donc au cadre spécialisé du matériel antérieur mentionné plus haut, ce cadre spécialisé étant généralement solidaire de la surface de cuisson anti-adhérent. Dans la suite de la description et sur les dessins annexés, le plateau est représenté sous forme d'un élément indépendant, mais il est également possible qu'il fasse partie intégrante d'un ensemble, comme un chariot ou une chaîne de transfert.

Les cotes hors-tout du plateau 1 sont définies par les dimensions standard des équipements qui selon les cas le recevront ou en feront office : ouverture des portes de four, chariots de manutention, de stockage ou de cuisson, chaînes de transfert dans les postes automatisés.

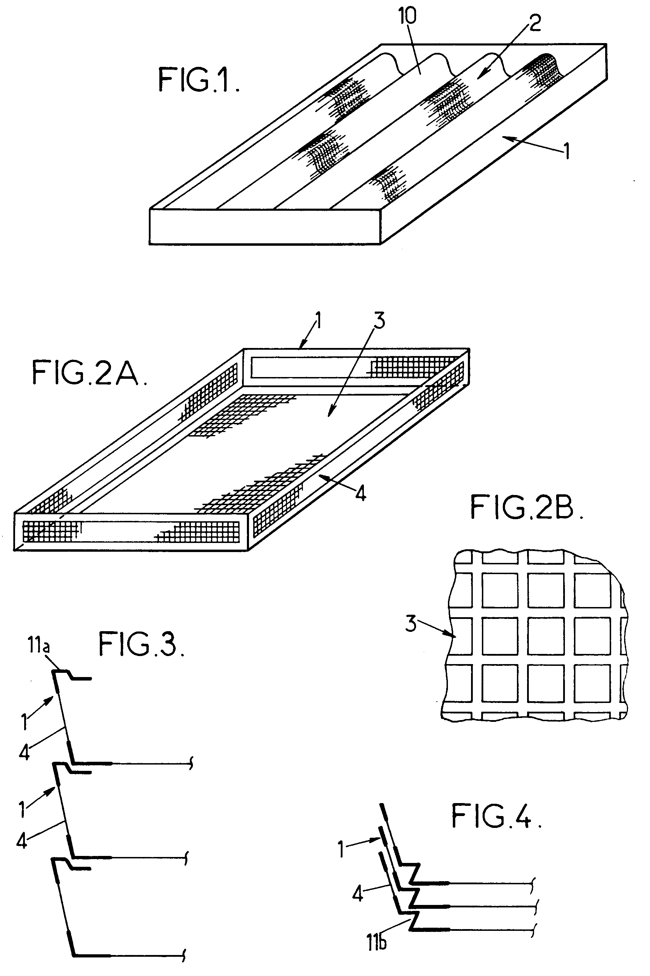

Il a la forme d'un bac rectangulaire ou carré, à fond 3 plat, de préférence ajouré (comme montré à la figure 2B), les bords 4 également de préférence ajourés servant à caler la forme ou membrane préformée 2, et à lui conférer une bonne rigidité. L'aération du plateau est réalisée de façon à faciliter la transmission et le rayonnement de la chaleur pour les fours à sole ou tunnel, et à créer des turbulences d'air chaud dans le cas des fours ventilés afin d'obtenir une cuisson uniforme. (cf. figures 2A et 2B).

Les essais de cuisson avec un plateau en acier inoxydable ont montré qu'il fallait choisir des perforations donnant un maximum de vide pour le passage de l'air chaud, tout en conférant le plus de rigidité possible sans alourdir le plateau. A titre documentaire, les meilleurs résultats de cuisson pour les pains à croûte du type baguette ont été obtenus avec un indice de 70 % de vide. Des nervures ou autres renforts renforçant la rigidité du plateau peuvent aussi être judicieusement ménagés dans le plateau. Pour d'autres produits de panification tels que les buns, soft-rolls, les petits pains sandwich américain, le plateau ne doit pas être nécessairement ajouré.

Un rebord latéral 11 renforce la rigidité générale, et immobilise la membrane ou forme anti-adhérente lors des manutentions. Selon les utilisations, ce rebord est spécialement conçu pour rendre les plateaux, soit superposables et empilables, soit emboîtables.

En effet, sur les chaînes de fermentation et de cuisson où les manipulations sont assurées automatiquement, le stockage des plateaux soit à vide, soit pendant la fermentation pose des problèmes de place. Il peut donc être utile de prévoir, dans ce cas, un dessin spécial (cf. par exemple figure 3) du rebord supérieur 11a du plateau 1, permettant un empilage des plateaux 1 les uns sur les autres sans dommage pour leur contenu, et sans arêtes trop vives qui viendraient gêner les transferts automatiques.

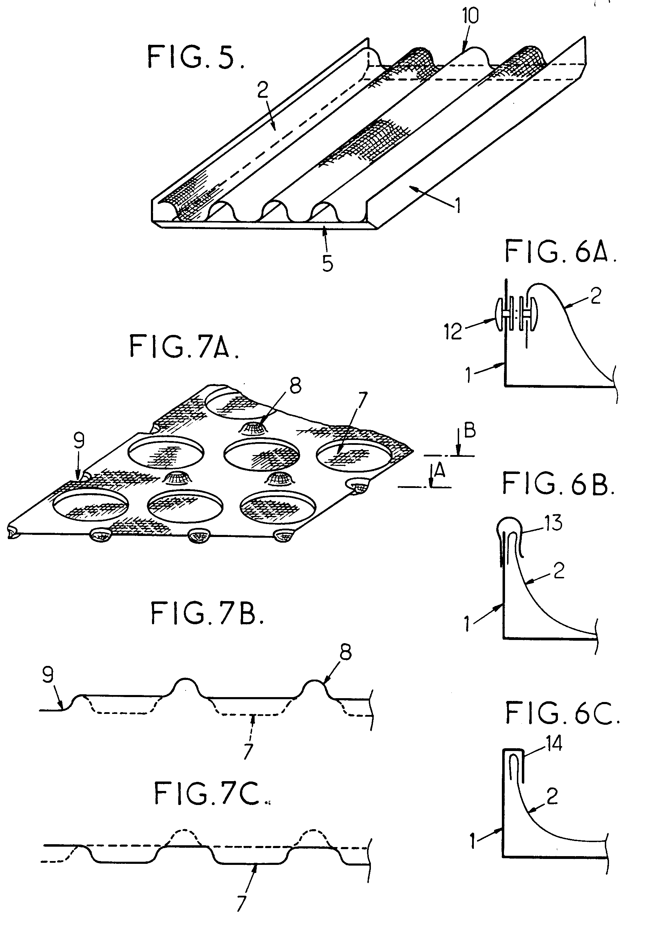

Pour obtenir un gain maximum de place, il peut être prévu de préférence que les plateaux 1 soient emboîtables les uns dans les autres (cf. par exemple figure 4), ce qui implique un évasement des bords latéraux 4. Il est cependant prévu un léger décroché 11b, à la base ou au sommet des bords latéraux évasés, qui vient recevoir le côté du plateau suivant, de façon que les plateaux soient aisément déboîtables et qu'il ne se produise pas de phénomène d'encastrage ou de coincement.

Par ailleurs, pour faciliter la sortie des pains par simple glissement après cuisson, il peut être prévu d'aménager un abaissement et une inclinaison de deux des quatre rebords latéraux (cf. figure 5). Ainsi, le boulanger pourra-t-il aisément saisir le plateau et faire glisser les pains dans un panier, la membrane ou forme anti-adhérente restant quant à elle dans le plateau grâce au maintien d'un léger rebord incliné (cf. figure 5, repère 5). Ce léger rebord 5 aidera également à maintenir la rigidité de l'ensemble du plateau.

Pour des raisons de résistance à la corrosion et d'hygiène, les plateaux sont fabriqués en métal inoxydable (par exemple : acier inox ou aluminium).

Comme déjà indiqué, les meilleurs résultats de cuisson, en four ventilé et en four à sole classique, ont été obtenus avec des plateaux fabriqués à partir de tôles perforées. En effet, le transfert de chaleur s'effectue à un rythme convenant parfaitement à la cuisson des pâtons, qui ne doivent pas être "saisis" trop vite en surface, de façon à ce qu'ils conservent leurs capacités maximales de développement dans les premières minutes de leur entrée dans le four, avant fixation définitive de la croûte.

Pour l'utilisation dans des fours à micro-ondes, il faut éviter l'emploi de matériaux conducteurs ou diélectriques. On choisit donc dans ce cas des matériaux isolants et non diélectriques, tels que porcelaine, verre, céramique ou certaines matières synthétiques.

Pour les fours classiques (sole fixe, ventilé -rotatif ou non-, tunnel), le nouveau système polyvalent montre les avantages décrits ci-après :
il permet de cuire correctement dans tous les types de fours :
- - four ventilé :: le plateau en contact avec la forme anti-adhérente permet de retrouver un certain "effet de sole", c'est-à-dire une cuisson du fond du pain par conduction. D'autre part, le plateau, de par ses perforations, crée des turbulences du courant d'air chaud favorisant une meilleure cuisson des pâtons ;
- - four à sole fixe :: le plateau protège les formes anti-adhérentes d'une usure mécanique par frottement lors des enfournements et défournements. Il évite les manutentions délicates des pâtons fermentés (donc fragiles) entre la chambre de pousse, le tapis enfourneur ou la pelle et le four lui-même ;
- - four tunnel :: le nouveau système permet d'obtenir des baguettes et des pains réguliers et droits, lorsqu'ils sont cuits sur des fours tunnels à bande transporteuse. Les manutentions automatiques des pâtons sont assurées sans dommage, car ceux-ci ne sont plus pris en charge individuellement.

Dans certains cas, très particuliers, notamment lorsque le démoulage des produits cuits est assuré par une machine automatique, opérant soit par succion, soit par balayage ou peignage, on peut alors, si nécessaire assujettir la membrane ou forme anti-adhérente et auto-portante sur son support à rebords latéraux par un jeu de fixations amovibles, telles que boutons pression 12 (figure 6A), clips 13 (figure 6B) ou pinces 14 (figure 6C).

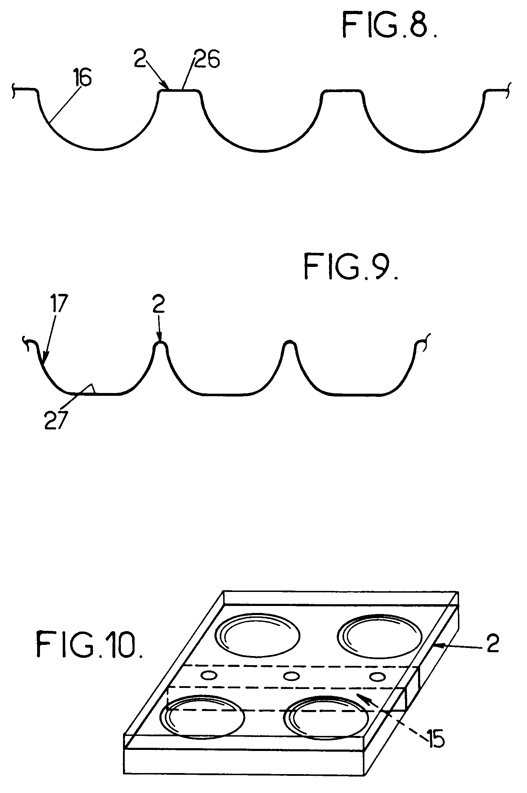

On peut également lester la membrane ou forme anti-adhérente par un poids ou une barre 15 judicieusement rivetée à la membrane 2 entre ses empreintes (cf. figure 10).

Ces solutions ont pour but de maintenir la membrane ou forme anti-adhérente dans le plateau, tout en lui conservant son caractère totalement amovible.

D'un point de vue fondamental, la fonction mécanique de soutien et la fonction de membrane ou forme anti-adhérente sont entièrement indépendantes.

Pour autant d'usages différents qu'il le souhaite, le boulanger-pâtissier n'a besoin que du nombre minimum de plateaux 1 en fonction de son en-cours de fabrication.

Par contre, il aura en réserve des membranes ou formes anti-adhérentes 2 spécialisées selon les produits qu'il veut fabriquer. Ces membranes ou formes anti-adhérentes sont peu encombrantes, légères, lavables, économiques et emboîtables par famille. Leur remplacement ne pose aucun problème.

Ces avantages ont pour conséquence de supprimer les retraitements des filets métalliques alvéolés et des plaques de cuisson métalliques (à empreintes ou plates), car dans le nouveau système polyvalent, il est facile et économique de remplacer la membrane ou forme anti-adhérente usagée par une neuve. Ces membranes ou formes anti-adhérentes, préformées, interchangeables, auto-portantes sur un support à rebords latéraux, mais indépendantes de ce support sont des produits nouveaux.

Dans les modes préférés de réalisation de l'invention, les membranes ou formes anti-adhérentes ont les caractéristiques décrites ci-après :

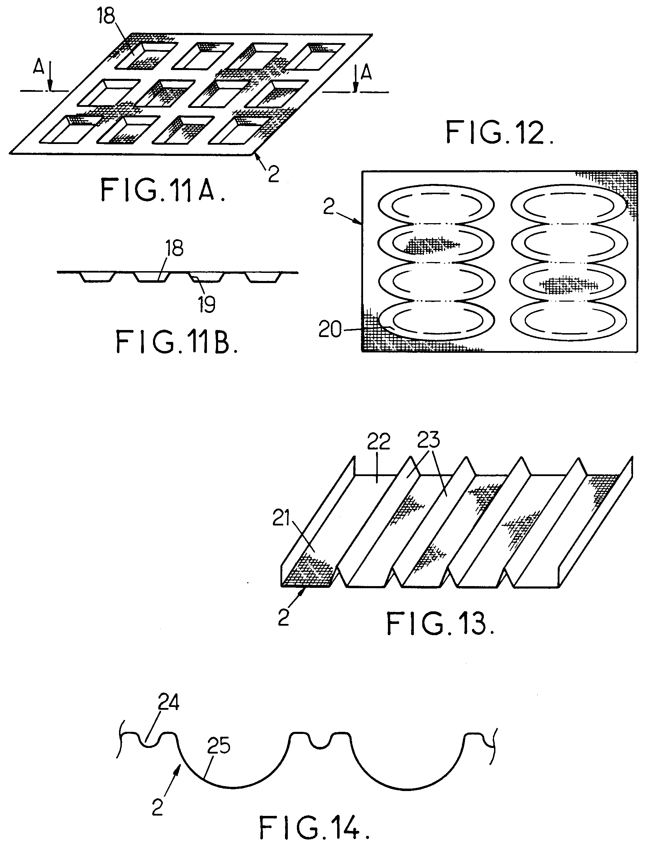

La membrane ou forme anti-adhérente conforme à l'invention est amovible ; un même plateau indépendant ou un même support indépendant à rebords latéraux jouant le rôle dudit plateau accepte de telles membranes ou formes anti-adhérentes ayant des formes multiples, notamment :
- ondes 10 en forme de cuvettes quasi-cylindriques plus ou moins larges, dont la largeur correspond à celle d'une baguette ou d'un pain, et la hauteur à la moitié au maximum de la hauteur d'une baguette ou d'un pain (cf. figure 1 ou figure 5) ;
- ondes 16 en forme de cuvettes quasi-cylindriques plus ou moins larges, entre lesquelles sont aménagés des intervalles matérialisés par une surface plane 26 au sommet des cuvettes, assurant une meilleure circulation de la chaleur (cf. figure 8) ;
- ondes 17 en forme de cuvettes quasi-cylindriques plus ou moins larges, le fond 27 de ces cuvettes étant légèrement aplati sur une largeur de 2 à 4 cm, de façon à permettre au pain (tel que pain pour sandwich) cuit de reposer à plat et de ne pas chuter d'un côté ou de l'autre, une fois sorti de la cuvette (cf. figure 9) ;
- creux 18 de forme rectangulaire ou carrée (cf. figure 11A), avec une dépouille 19 (cf. figure 11B qui est une coupe selon la ligne A-A de la figure 11A) permettant la sortie des pièces cuites et une séparation par d'étroits couloirs, de façon à recevoir toutes pièces à section rectangulaire ou carrée, telles que les pains au chocolat, les tranches aux amandes ;
- berceaux ovales 20 de forme oblongue avec une dépouille (cf. figure 12) permettant de sortir les pièces, ces berceaux se succédant de façon adjacente par le grand côté, pouvant recevoir des pièces en forme de navette, telles que les petits pains au lait, les croissants beurre ;
- lignes successives d'assiettes rondes et creuses 7, à fond plat, de diamètre, de profondeur et de dépouille (cf. figure 7A, figure 7B qui est une coupe selon la ligne A-A de la figure 7A et figure 7C qui est une coupe selon la ligne B-B de la figure 7A) variables, selon la nature des pièces à cuire, telles que petits pains ronds, pains pour hamburgers, buns, muffins, pains aux raisins ;
- demi-cylindres en creux, d'épaisseur et longueur variées, permettant de recevoir des pièces telles que pains à hot dogs, ficelles fantaisie ;
- travées rectangulaires 21 à fond plat 22 séparées par un pli 23 en forme de V inversé, destinées à recevoir des pièces de viennoiserie telles que des croissants, ou toutes autres pièces devant être jointives par un ou plusieurs points de leur périmètre (cf. figure 13).

Les membranes ou formes anti-adhérentes préformées, non fixées sur le plateau servent à recevoir le pâton après façonnage. Il y reste pendant toute la fermentation et la cuisson, ce qui évite des manipulations délicates, particulièrement entre la fin de la fermentation et la mise au four, lorsque la structure du pâton fermenté est d'une très grande fragilité.

Les formes ou membranes anti-adhérentes peuvent être avantageusement fabriquées en tissu de verre et ou dans des fibres nouvelles telles que fibre de carbone, fibre ou fil de céramique ou matériaux similaires. Par exemple, les expériences ont montré que la fibre de carbone permet une excellente diffusion de la chaleur à travers l'ensemble de la membrane ou forme anti-adhérente, ce qui est un avantage lorsque, par exemple, on doit cuire une piéce de grande taille nécessitant une cuisson très uniforme en tous ses points, telles que les bandes de gênoises ou les "sponge cakes".

La fibre de céramique, quant à elle, présente également des avantages de bon transfert de chaleur. Elle permet de plus une très bonne liaison avec les silicones. Elle est idéale pour la cuisson sur les fours utilisant le courant à haute fréquence (fours à micro-ondes).

L'anti-adhérence des formes ou membranes est obtenue par imprégnation et/ou enduction des brins par un ou plusieurs élastomères ou résines silicone, qui sont ensuite vulcanisées ou cuites.

La membrane ou forme anti-adhérente peut être selon les besoins fabriquée à partir de toile tissée, de tissus tricotés ou de textiles non tissés. Par exemple, on choisit de préférence la toile tissée pour les formes développables (ondes parallèles, cloisons), tandis que l'on préfère le tissu tricoté pour les formes non développables nécessitant une déformation dans les deux directions de la membrane, par procédé d'emboutissage, comme décrit plus loin.

Quant au textile non tissé, il est préféré lorsque la membrane ou forme doit comporter une aération minimum, voire nulle, dans le cas d'utilisation pour la cuisson de pâtes liquides ou très molles, telles que madeleines ou cakes.

L'aération des tissus varie en fonction de la nature des pâtes : les membranes comportent au moins 25 % de vide et de préférence 50 % de vide, et encore de préférence 75 % de vide ; de supérieure à 50 % de vide pour les pâtes normales, elle deviendra inférieure à 50 % de vide pour les pâtes congelées et les pâtes jaunes qui présentent des problèmes de consistance favorisant l'ancrage mécanique dans les mailles ou les trous du tissu. Certaines pâtes telles que la pâte à cake nécessitent un tissu à mailles très serrées que l'on occlut par imprégnation totale ou enduction totale de silicones.

Les matériaux anti-adhérents sont imprégnés dans, puis appliqués sur, les tissus mentionnés ci-dessus. La préformation est obtenue par le raidissement dû à la vulcanisation des élastomères ou à la cuisson des résines.

Lorsqu'il s'agit de formes développables en deux dimensions, on procède juste avant la vulcanisation ou la cuisson par moulage sans déformation.

Par contre, lorsqu'il convient de réaliser des empreintes non développables en trois dimensions selon une surface gauche (petits pains ronds, buns, croissants, pains au chocolat, hot dogs), on procède juste avant la vulcanisation ou la cuisson par emboutissage de la toile imprégnée sur des moules adéquats. Or, la toile ne peut être emboutie sans endommager la trame du tissu. Il existe alors deux procédés possibles :
- le premier consiste à travailler le tissu dans le biais (ce qui permet de le déformer sans dommage, mais a l'inconvénient d'utiliser beaucoup plus de matière que nécessaire, et donc de laisser des chutes importantes) ;
- le second part du principe suivant : il faut que chaque fil de trame ou de chaîne ait rigoureusement la même longueur d'une extrémité à l'autre de la pièce fabriquée. Ainsi, lorsque certains fils plongent au creux des empreintes de petits pains, il faut faire en sorte que ceux qui forment les intervalles entre les empreintes profitent du même embuvage (chemin de même longueur) que les autres. Sur leur parcours, une succession de creux et de bosses est aménagée (cf. figure 7A, coupe A), pour que leur longueur totale soit strictement la mème que celle de leurs voisins qui dessinent les empreintes (cf. figure 7A, coupe B). Sur le pourtour de la pièce à fabriquer, les creux permettent de donner une meilleure assise à l'ensemble en posant partie des côtés de la pièce au niveau du fond des empreintes (cf. figures 7A et 7B, repère 9). Au centre de la pièce, entre les empreintes, sont disposées des bosses qui permettent de mieux séparer les pâtons entre eux lorsque ceux-ci grossissent au cours de la fermentation et ont tendance à s'attirer entre eux lorsqu'ils gonflent en dehors des empreintes (cf. figures 7A et 7B, repère 8). Ce procédé permet de travailler dans le droit fil et d'éviter les pertes importantes causées par le travail en biais.

Pour assurer le caractère autoportant des membranes préformées dans le support indépendant, de préférence en forme de plateaux à rebords latéraux, destinés à les recevoir, pour assurer un bon raidissement et une bonne solidité de la membrane ou de la forme anti-adhérente, il est utile de procéder à l'application à certains endroits choisis, de couches plus denses d'élastomères ou résines silicones, de façon à créer, après vulcanisation ou cuisson, des zones 24 de dureté suffisante. Par exemple, entre les ondes des cuvettes 25, pour obtenir un effet d'accordéon, et éviter un avachissement possible (cf. figure 14) ; par exemple encore, sous le fond des ondes des baguettes, pour éviter l'abrasion par frottement ; enfin, sur tout point de la membrane ou forme anti-adhérente pouvant, soit à cause des manipulations, soit à cause des cuissons, être amené à une usure plus rapide que l'ensemble de la membrane ou forme anti-adhérente. De préférence, les membranes préformées anti-adhérentes recevront systématiquement sur l'ensemble de leur pourtour ou périmètre une couche plus dense d'élastomères ou de résines silicones.

Le nouveau système polyvalent qui vient d'être décrit, caractérisé notamment par la possibilité d'employer un jeu de nouvelles formes ou membranes souples, interchangeables du fait de leur caractère parfaitement amovible par rapport au support en forme de plateau à rebords latéraux destiné à les recevoir, préformées selon les dimensions et formes de toutes les variétés de produits de panification, est donc d'une très grande souplesse d'utilisation pour le boulanger (tous pains, tous fours) et d'une grande économie (coût réduit, stockage réduit). Bien entendu, le domaine d'utilisation de l'invention n'est pas limitée à la boulangerie et peut s'étendre à des domaines connexes tels que la pâtisserie et la charcuterie (produits traîteurs : quiches, tartes, pâtés en croûte,etc.).

## Revendications

1. Membrane ou forme antiadhérente destinée à supporter des pièces de panification ou analogue au cours du processus de fermentation et de cuisson de la pâte, cette membrane étant constituée en au moins un élastomère de silicone ou une résine de silicone associé à une trame de renfort,
caractérisée en ce que :
- elle est autoportante ;
- elle possède une configuration générale et des dimensions prédéterminées de manière telle qu'elle puisse reposer de façon amovible et interchangeable sur un plateau de support unique ; et
- elle est préformée pour présenter une multipllcité d'empreintes en creux indépendantes dudit support et ayant toutes formes souhaitables en correspondance avec les formes individuelles de panification ou analogue devant être soumises au processus de fermentation et de cuisson ;

2. Membrane selon la revendication 1, caractérisée par le fait qu'elle est aérée.

3. Membrane selon la revendication 1, caractérisée par le fait qu'elle est non aérée.

4. Membrane selon l'une quelconque des revendications 1 à 3, caractérisée en ce qu'elle comporte une trame tissée, tricotée ou non tissée constituée de fils choisis parmi les fils de verre, les fibres de carbones et les fils en céramique imprégnés et/ou enduits avec au moins un élastomère ou une résine de silicone.

5. Membrane selon la revendication 4, caractérisée par le fait que son préformage est obtenu par moulage et raidissement par vulcanisation des élastomères ou par cuisson des résines de silicone, avec de préférence création de zones plus épaisses de silicone, pour assurer le raidissement et/ou la protection des zones fragiles.

6. Membrane selon la revendication 4, caractérisée par le fait que son préformage est obtenu par emboutissage et par le fait qu'elle est raidie, une fois emboutie, par vulcanisation des élastomères ou par cuisson des résines, avec de préférence création de zones plus épaisses de silicone, pour assurer le raidissement et/ou la protection des zones fragiles.

7. Membrane selon la revendication 6, caractérisée par le fait que l'emboutissage est effectué de manière que tous les fils possèdent la même longueur en compensant les empreintes en creux par des bosses disposées dans les zones centrales sises entre les creux, les rangées latérales extérieures des bosses pouvant être inversées vers le bas.

8. Membrane selon l'une quelconque des revendications 1 à 5, caractérisée par le fait qu'elle possède un profil ondulé en forme de cuvettes (10, 16, 17, 25) quasi semi-cylindriques plus ou moins larges avec un fond plus ou moins aplati, ces cuvettes étant éventuellement séparées par des intervalles matérialisés par une surface plane (26) sise au sommet des cuvettes assurant une meilleure circulation de la chaleur.

9. Membrane selon l'une quelconque des revendications 1 à 5, caractérisée par le fait qu'elle est moulée à obtenir une succession de travées (21) rectangulaires ou carrées à fond plat (22), séparées par un pli (23) en forme de V inversé, destinées à recevoir des pièces de viennoiserie telles que des croissants, ou toutes autres pièces devant être jointives par un ou plusieurs points de leurs périmètres.

10. Membrane selon l'une quelconque des revendications 1 à 4, 6 ou 7, caractérisée par le fait qu'elle est emboutie de façon à créer longitudinalement et transversalement des suites d'empreintes en creux (18), de forme rectangulaire ou carrée avec une dépouille (19) permettant la sortie des pièces cuites et une séparation par d'étroits couloirs, de façon à recevoir toutes pièces à section rectangulaire ou carrée, telles que les pains au chocolat, les tranches aux amandes.

11. Membrane selon l'une quelconque des revendications 1 à 4, 6 ou 7, caractérisée par le fait qu'elle est emboutie de façon à créer des berceaux ovales (20) de forme oblongue avec une dépouille permettant de sortir les pièces, ces berceaux se succédant de façon adjacente par le grand côté, pouvant recevoir des pièces en forme de navette, telles que les petits pains au lait, les croissants au beurre.

12. Membrane selon l'une quelconque des revendications 1 à 4, 6 ou 7, caractérisée par le fait qu'elle est emboutie de façon à créer des lignes successives d'assiettes (7) rondes et creuses, à fond plat, de diamètre, de profondeur et de dépouille variables, selon la nature des pièces à cuire, telles que petits pains ronds, pains pour hamburgers, buns, muffins, pains aux raisins.

13. Membrane selon l'une quelconque des revendications 1 à 4, 6 ou 7, caractérisée par le fait qu'elle est emboutie de façon à créer une succession de demi-cylindres en creux (9), d'épaisseur et longueur variées permettant de recevoir des pièces telles que pains à hot dog, ficelles fantaisie.

14. Utilisation des membranes selon l'une quelconque des revendications 1 à 13 dans le domaine de la boulangerie et/ou la pâtisserie.

15. Matériel polyvalent pour supporter des produits de panification ou analogue au cours du processus de fermentation et de cuisson de la pâte,
caractérisé en ce qu'il comporte :
- un plateau (1) à rebords latéraux (4), et
- au moins une membrane ou forme (2) anti-adhérente constituée selon l'une quelconque des revendications 1 à 13.

16. Matériel polyvadent selon la revendication 15, caractérisé en ce que le plateau a la forme d'un bac rectangulaire ou carré à fond (3) plat.

17. Matériel polyvalent selon la reendication 16, caractérisé en ce que le fond et/ou le rebord du plateau sont ajourés.

18. Matériel polyvalent selon la revendication 16 ou 17, caractérisé par le fait que les rebords latéraux (4) sont conformés pour autoriser l'empilage ou l'emboîtage des plateaux.

19. Matériel polyvalent selon l'une quelconque des revendications 15 à 18, caractérisé par le fait que le plateau est réalisé en métal, de préférence en acier inoxydable ou en aluminium.

20. Matériel polyvalent selon l'une quelconque des revendications 15 à 18, caractérisé par le fait que le plateau est réalisé en un matériau non diélectrique pouvant être utilisé dans un four à micro-ondes.

21. Matériel polyvalent selon l'une quelconque des revendications 15 à 20, caractérisé par le fait qu'il comporte des moyens de fixation démontable et amovible (12, 13, 14) des membranes ou formes (2) sur le plateau de façon à éviter leur déplacement inopiné lors du démoulage automatique des pains par succion, balayage ou peignage.

22. Matériel polyvalent selon l'une quelconque des revendications 15 à 21, caractérisé en ce que le plateau est un élément indépendant.

23. Matériel polyvalent selon l'une quelconque des revendications 15 à 21, caractérisé en ce que la plateau fait partie d'un ensemble de transport, tel qu'un chariot ou une chaîne de transfert.

## Claims

1. Non-stick foil or mould intended for the support of panification items or similar during fermentation and cooking processes of dough, this foil being constituted by at least one silicone elastomer or one silicone resin combined with a reinforcing frame,
characterized in that:
- it is self-supporting
- it has a general configuration and predetermined dimensions such that it can rest in a movable and interchangeable fashion on a single support tray; and
- it is preformed so as to present a multiplicity of hollow indentations independent of said support and having any desired shapes corresponding to the individual shapes for panification or similar having to be subjected to fermentation and cooking processes.

2. Foil according to claim 1, characterized in that it is aerated.

3. Foil according to claim 1, characterized in that it is not aerated.

4. Foil according to any one of claims 1 to 3, characterized in that it includes a woven, knitted or non-woven frame constituted by fibres chosen from glass fibres, carbon fibres and ceramic fibres impregnated and/or coated with at least one silicone elastomer or resin.

5. Foil according to claim 4, characterized in that its preforming is obtained by moulding and stiffening by vulcanization of the elastomers or by curing the silicone resins, preferably with the creation of thicker areas of silicone to ensure the stiffening and/or protection of the fragile areas.

6. Foil according to claim 4, characterized in that its preforming is obtained by stamping and in that once stamped it is stiffened by vulcanization of the elastomers or by curing the resins, preferably with the creation of thicker areas of silicone to ensure the stiffening and/or protection of the delicate areas.

7. Foil according to claim 6, characterized in that the stamping is carried out in such a manner that all the fibres have the same length compensating for the hollow indentations by humps arranged in the central areas located between the hollows, the outer lateral rows of humps being able to be inverted downwards.

8. Foil according to any one of claims 1 to 5, characterized in that it has an undulating profile in the mould of quite large quasi semi-cylindrical troughs (10, 16, 17, 25) with a fairly flat bottom, these troughs being optionally separated by intervals produced by a plane surface (26) located at the top of the troughs ensuring a better heat circulation.

9. Foil according to any one of claims 1 to 5, characterized in that it is moulded to obtain a succession of rectangular or square compartments (21) with a flat bottom (22), separated by a an inverted V-shaped fold (23), intended to receive the patisserie items such as croissants, or any other items having to be joined by one or more points on their perimeters.

10. Foil according to any one of claims 1 to 4, 6 or 7, characterized in that it is stamped so as to created longitudinally and transversally a series of rectangular or square-shaped hollow indentations (18) with a draft (19) allowing removal of the cooked items and a separation by narrow channels, so as to receive any items with a rectangular or square section, such as pains au chocolat, almond slices.

11. Foil according to any one of claims 1 to 4, 6 or 7, characterized in that it is stamped so as to created oblong-shaped oval cradles (20) with a draft allowing the items to be removed, these cradles beg side-by-side in an adjacent fashion along the long side, being able to receive shuttle-shaped items, such as petits pains au lait, croissants au beurre.

12. Foil according to any one of claims 1 to 4, 6 or 7, characterized in that it is stamped so as to create successive lines of round and hollow dishes (7) with a flat bottom, with variable diameter, depth and draft, depending on the type of items to be cooked, such as round rolls, hamburger buns, buns, muffins, pains aux raisins.

13. Foil according to any one of claims 1 to 4, 6 or 7, characterized in that it is stamped so as to create a succession of hollow semi-cylinders (9), of varied thickness and length allowing items such as hot dog rolls, ficelles fantaisie to be received.

14. Use of the foils according to any one of claims 1 to 13 in the field of bakery and or confectionery.

15. Multi-purpose equipment for supporting panification products or similar during the fermentation and cooking processes of dough, characterized in that it includes:
- a tray (1) with lateral edges (4), and
- at least one non-stick foil or mould (2) constituted according to any one of claims 1 to 13.

16. Multi-purpose equipment according to claim 15, characterized in that the tray has the shape of a rectangular or square container with a flat bottom (3).

17. Multi-purpose equipment according to claim 16, characterized in that the bottom and/or the edge of the tray are open-worked.

18. Multi-purpose equipment according to claim 16 or 17, characterized in that the lateral edges (4) are formed so as to allow stacking or fitting-together of the trays.

19. Multi-purpose equipment according to any one of claims 15 to 18, characterized in that the tray is produced in metal, preferably in stainless steel or aluminium.

20. Multi-purpose equipment according to any one of claims 15 to 18, characterized in that the tray is produced in a non-dielectric material which can be used in a microwave oven.

21. Multi-purpose equipment according to any one of claims 15 to 20, characterized in that it includes detachable and movable means (12, 13 14) for fixing the foils or moulds (2) on the tray 50 as to avoid their unexpected movement during automatic removal of the bread from the mould by suction, sweeping or combing.

22. Multi-purpose equipment according to any one of claims 15 to 21, characterized in that the tray is an independent element.

23. Multi-purpose equipment according to any one of claims 15 to 21, characterized in that the tray forms part of a transport assembly, such as a trolley or transfer line.

## Patentansprüche

1. Anti-Haft-Membran oder -Form zum Tragen von Brotprodukten oder dergleichen während des Gärens und Backens des Teiges, wobei diese Membran aus mindestens einem Silikonelastomer oder einem Silikonharz, verbunden mit einem Verstärkungsschuß, gebildet ist, dadurch gekennzeichnet, daß
- sie selbsttragend ist;
- sie einen allgemeinen Aufbau und festgelegte Maße besitzt, derart, daß sie lose und austauschbar auf einem einzigen Trägertablett ruhen kann; und
- daß sie vorgeformt ist, um eine Mehrzahl von von dem genannten Träger unabhängigen Vertiefungen bzw. hohlen Aufnahmen aufzuweisen, wobei sie sämtliche wünschenswerte Formen, übereinstimmend mit den individuellen Brotformen oder dergleichen, bevor diese dem Gären oder Backen ausgesetzt werden, aufweist.

2. Membran nach Anspruch 1, dadurch gekennzeichnet, daß sie lufthaltig ist.

3. Membran nach Anspruch 1, dadurch gekennzeichnet, daß sie nicht lufthaltig ist.

4. Membran nach einem der Ansprüche 1 bis 3, dadurch gekennzeichnet, daß sie einen gewebten, gewirkten oder nichtgewebten Schuß aufweist, der aus Fasern gebildet ist, die aus Glasfasern, Kohlenstoff-Fasern und keramischen Fasern ausgewählt sind, die mit mindestens einem Elastomer oder Silikonharz imprägniert und/oder überzogen sind.

5. Membran nach Anspruch 4, dadurch gekennzeichnet, daß ihre Vorformung durch Abformung und Aussteifung mittels Vulkanisierung der Elastomere oder mittels Aushärtung der Silikonharze unter bevorzugter Herstellung von stärkeren Silikonzonen erhalten ist, um die Aussteifung und/oder den Schutz der zerbrechlichen Zonen zu gewährleisten.

6. Membran nach Anspruch 4, dadurch gekennzeichnet, daß ihre Vorformung durch Tiefung sowie dadurch erhalten ist, daß sie, sobald sie ausgetieft ist, mittels Vulkanisierung der Elastomere oder mittels Aushärtung der Harze unter bevorzugter Herstellung stärkerer Silikonzonen ausgesteift ist, um die Aussteifung und/oder den Schutz der zerbrechlichen Zonen zu gewährleisten.

7. Membran nach Anspruch 6, dadurch gekennzeichnet, daß die Tiefung so ausgeführt ist, daß alle Fasern dieselbe Länge besitzen, indem die hohlen Aufnahmen durch Buckel in den zentralen Zonen, die zwischen den Hohlräumen liegen, ausgeglichen sind, wobei die äußeren seitlichen Reihen der Buckel nach unten zeigen können.

8. Membran nach einem der Ansprüche 1 bis 5, dadurch gekennzeichnet, daß sie ein gewelltes, schalenförmiges, fast halbzylindrisches, mehr oder weniger breites Profil (10, 16, 17, 25) mit einem mehr oder weniger abgeflachten Boden besitzt, wobei diese Schalen gegebenenfalls durch Zwischenräume getrennt sind, die durch eine ebene Fläche (26) gekennzeichnet sind, welche am Scheitel der Schalen gelegen ist, wobei eine bessere Wärmezirkulation gewährleistet ist.

9. Membran nach einem der Ansprüche 1 bis 5, dadurch gekennzeichnet, daR sie in Formen gegossen ist, um eine Folge von rechteckigen oder quadratischen Fächern (21) mit flachem Boden (22) zu erhalten, die durch einen Falz (23) in Form eines umgekehrten V getrennt sind und die dazu bestimmt sind, Wiener Gebäckstücke wie Croissants oder sämtliche andere Stücke aufzunehmen, bevor diese an einem oder mehreren Punkten ihres Umfanges aneinanderstoßen.

10. Membran nach einem der Ansprüche 1 bis 4, 6 oder 7, dadurch gekennzeichnet, daß sie so ausgetieft ist, daß längs und quer Reihen von hohlen Aufnahmen (18) rechteckiger oder quadratischer Form mit einer Formschräge (19) geschaffen sind, die die Abführung der gebackenen Stücke und eine Trennung durch schmale Rinnen ermöglicht, so daß sämtliche Stücke mit einem rechteckigen oder quadratischen Querschnitt wie Schokoladenbrote und Mandelschnitten erhalten sind.

11. Membran nach einem der Ansprüche 1 bis 4, 6 oder 7, dadurch gekennzeichnet, daß sie so ausgetieft ist, daß ovale Mulden (20) länglicher Form mit einer Formschräge geschaffen sind, die es ermöglicht, die Stücke abzuführen, wobei diese Mulden mit der großen Seite angrenzend aufeinanderfolgen und schiffchenförmige Stücke wie Milchbrötchen und Buttercroissants aufnehmen können.

12. Membran nach einem der Ansprüche 1 bis 4, 6 oder 7, dadurch gekennzeichnet, daß sie so ausgetieft ist, daß aufeinanderfolgende Reihen von runden und tiefen Tellern (7) mit flachem Boden und variablem Durchmesser, variabler Tiefe und variabler Formschräge je nach Art des Gebäckstückes, wie runde Brötchen, Brötchen für Hamburger, Buns, Muffins, Rosinenbrote, hergestellt sind.

13. Membran nach einem der Ansprüche 1 bis 4, 6 oder 7, dadurch gekennzeichnet, daß sie so ausgetieft ist, daß eine Folge von hohlen Halbzylindern (9) mit verschiedener Dicke und Länge geschaffen ist, wobei die Aufnahme von Stücken wie Hot-Dog-Brote und dünne Phantasie-Brote ermöglicht ist.

14. Verwendung der Membranen nach einem der Ansprüche 1 bis 13 auf dem Gebiet der Bäckerei und/oder Konditorei.

15. Mehrzweckgerät zum Tragen der Brotprodukte oder dergleichen während des Gärens und Backens des Teiges, dadurch gekennzeichnet, daß sie aufweist:
- ein Tablett (1) mit seitlichen Leisten (4) und
- mindestens eine Anti-Haft-Membran oder -Form (2), die nach einem der Ansprüche 1 bis 13 gebildet ist.

16. Mehrzweckgerät nach Anspruch 15, dadurch gekennzeichnet, daß das Tablett die Form eines rechteckigen oder quadratischen Behälters mit flachem Boden (3) hat.

17. Mehrzweckgerät nach Anspruch 16, dadurch gekennzeichnet, daß der Boden und/oder die Leiste des Tabletts durchbrochen sind.

18. Mehrzweckgerät nach Anspruch 16 oder 17, dadurch gekennzeichnet, daß die seitlichen Leisten (4) angepaßt sind, um das Stapeln oder Ineinanderschachteln der Tabletts zu erlauben.

19. Mehrzweckgerät nach einem der Ansprüche 15 bis 18, dadurch gekennzeichnet, daß das Tablett in Metall, vorzugsweise in rostfreiem Stahl oder Aluminium ausgeführt ist.

20. Mehrzweckgerät nach einem der Ansprüche 15 bis 18, dadurch gekennzeichnet, daß das Tablett in einem nicht dielektrischen Material ausgeführt ist, das in einem Mikrowellenofen genutzt werden kann.

21. Mehrzweckgerät nach einem der Ansprüche 15 bis 20, dadurch gekennzeichnet, daß es demontierbare und abnehmbare Befestigungsmittel (12, 13, 14) für die Membranen oder Formen (2) auf dem Tablett aufweist, so daß deren unbeabsichtigte Verlagerung beim automatischen Ausformen der Brote durch Saugen, Kehren oder Kämmen vermieden wird.

22. Mehrzweckgerät nach einem der Ansprüche 15 bis 21, dadurch gekennzeichnet, daß das Tablett ein selbständiges Teil ist.

23. Mehrzweckgerät nach einem der Ansprüche 15 bis 21, dadurch gekennzeichnet, daß das Tablett Teil einer Transporteinheit wie ein Wagen oder eine Übertragungskette ist.
